# EUROPÄISCHE PATENTSCHRIFT

(11) **EP 2 830 841 B1**
(45) Veröffentlichungstag und Bekanntmachung des Hinweises auf die Patenterteilung: **14.09.2016**
(21) Anmeldenummer: 13716723.5
(22) Anmeldetag: 01.03.2013
(51) Int. Cl.: B28B 11/24, H05B 3/60, F26B 3/347

(54) **VERFAHREN ZUR ELEKTRISCHEN VORTROCKNUNG EINES KERAMISCHEN ROHLINGS**
METHOD FOR ELECTRICAL PRE-DRYING OF A CERAMIC BLANK
PROCÉDÉ POUR LE PRÉSÉCHAGE ÉLECTRIQUE D'UNE ÉBAUCHE CÉRAMIQUE

(30) Priorität: 30.03.2012 DE 102012006423
(43) Veröffentlichungstag der Anmeldung: 04.02.2015
(73) Patentinhaber: Lapp Insulators GmbH, 95632 Wunsiedel (DE)
(72) Erfinder: HOFMANN, Simon, 95632 Wunsiedel (DE); JUDGE, Michael, 95199 Thierstein (DE)
(74) Vertreter: FDST Patentanwälte
(86) Internationale Anmeldenummer: PCT/EP2013/000599
(87) Internationale Veröffentlichungsnummer: WO 2013/143644

(56) Entgegenhaltungen:
- DE-A1- 19 714 811
- DE-C- 532 505
- GB-A- 1 278 044
- US-A- 2 320 474

## Beschreibung

Die Erfindung betrifft ein Verfahren zur elektrischen Vortrocknung eines feuchten Rohlings aus einer keramischen Rohmasse, wobei der Rohling in einen Stromkreis geschaltet und ein Wechselstrom durch den Rohling geleitet wird. Ein solches Verfahren wird in der keramischen Industrie üblicherweise eingesetzt, um der aus einer wässrigen Massesuspension der Ausgangsmaterialien, auch Schlicker genannt, durch Filter-, Zieh- oder Pressvorgänge hergestellten noch feuchten Rohmasse weitere Feuchtigkeit zu entziehen, um für eine nachfolgende Formgebung, beispielsweise durch Abdrehen, die notwendigen Eigenschaften hinsichtlich Plastizität und Stabilität zu erreichen.

Das Verfahren der elektrischen Vortrocknung eines Rohlings aus einer keramischen Rohmasse ist an sich bekannt und wird insbesondere bei der Herstellung von Porzellanisolatoren verschiedenster Dimensionen eingesetzt, um die nach dem Pressen als Massestrang vorliegenden Hubel auf die für eine nachfolgende Formgebung durch Abdrehen notwendig verringerte Restfeuchte zu bringen. Der noch feuchte Hubel wird hierzu als elektrischer Widerstand in einen Wechselstromkreis geschaltet. Durch den hindurchfließenden Wechselstrom wird der Hubel erwärmt, wodurch Wasser bis zum Erreichen der für die Formgebung notwendigen Restfeuchte ausgetrieben wird. Nach der elektrischen Vortrocknung wird der zylinderförmige Hubel, der eine Länge von mehreren Metern und einen Durchmesser von über 50 cm aufweisen kann, zur Formgebung der inneren und äußeren Kontur durch Abdrehen weiter verarbeitet.

Beispielsweise ist aus der US 2,320,474 A die Anwendung von Wechselstrom zur Trocknung eines feuchten keramischen Materials bekannt. Dabei wird das keramische Material als Widerstand in einen entsprechenden Stromkreis geschaltet und ein Wechselstrom durch das Material geleitet. Weiter geht aus dieser Druckschrift hervor, dass zur Optimierung der Trocknung die Frequenz mehr oder weniger kontinuierlich während des Trocknungsfortschrittes geändert werden kann.

Die DE 197 14 811 A1 offenbart ein Verfahren, um aus einem Formstrang abgelängte Frischbetondachsteine ohne Verwendung von Trennmittel aus den Unterformen zu entschalen. Hierzu wird die Unterform als Kurzschlussbrücke für einen elektrischen Strom verwendet.

Die DE 532 505 C zeigt die Trocknung nasser oder feuchter Stoffe mittels eines Hochfrequenzstromkreises. Die Anwendung feuchter keramischer Massen in diesem Trocknungsverfahren ist nicht offenbart.

Durch die elektrische Vortrocknung wird die Trocknungszeit der Hubel bis zum abdrehreifen Zustand gegenüber einer Lufttrocknung deutlich verkürzt. Durch die verkürzte Verweildauer der Hubel im Trocknungsprozess kann der Produktionsdurchsatz insgesamt vergrößert werden. Jedoch wird zur elektrischen Vortrocknung eine erhebliche Menge an zusätzlicher Energie benötigt, die es im Sinne der Wirtschaftlichkeit und des Umweltschutzes weiter zu verringern gilt.

Es ist Aufgabe der vorliegenden Erfindung, das Verfahren zur elektrischen Vortrocknung eines Rohlings aus einer keramischen Rohmasse hinsichtlich des Energiebedarfs weiter zu verbessern.

Diese Aufgabe wird für ein Verfahren zur elektrischen Vortrocknung der eingangs genannten Art erfindungsgemäß dadurch gelöst, dass der zur Trocknung eingesetzte Wechselstrom mit einer Frequenz größer als 100 Hz durch den Rohling geleitet wird. Hierzu wird insbesondere eine Wechselspannung entsprechender Frequenz an den Rohling angelegt.

Die Erfindung geht in einem ersten Schritt von der durch eigene Versuche überraschend gewonnenen Erkenntnis aus, dass bei der Hubeltrocknung mittels Wechselstrom bei gleicher Spannung die Stromaufnahme bzw. der durch den Hubel fließende Wechselstrom bei einem Übergang zu höheren Frequenzen größer als 100 Hz gegenüber der bislang üblichen Netzfrequenz sinkt, und nicht, wie bei einer kapazitiven Last erwartet, ansteigt. In einem zweiten Schritt wurden weitere Versuche durchgeführt, die neben der verringerten Stromaufnahme bei höheren Frequenzen auch belegen, dass durch die höheren Frequenzen die Trocknungszeit der Hubel bis zum Erreichen der Abdrehfeuchte zusätzlich verkürzt ist. Überraschend kann also bei einer Erhöhung der Frequenzen des durch den Hubel fließenden Wechselstroms gegenüber der Netzfrequenz aufgrund der bei gleicher Spannung verringerten Stromaufnahme und aufgrund der verkürzten Trocknungszeiten eine beachtliche Energieersparnis erzielt werden, die im Einzelfall bis zu 30 % beträgt.

Als Ursache für diesen überraschenden und nicht zu erwartenden Effekt wird der so genannte Skin-Effekt vermutet, der bei wechselstromdurchflossenen zylindrischen Leitern die Stromdichte im Inneren begrenzt und den Stromfluss auf den Rand bzw. auf eine Oberflächenschicht konzentriert. Der Skin-Effekt tritt in dicken Leitern auf, die gegenüber der Dicke der leitenden Oberflächenschicht einen großen Durchmesser aufweisen, wie dies der Fall bei noch feuchten zylindrischen Massesträngen aus der keramischen Rohmasse der Fall ist.

Der Skin-Effekt führt durch sich im Inneren des elektrischen Leiters addierende Wirbelströme zu einer Verdrängung des Stroms an den Rand, wobei die Stromdichte vom Rand des Leiters nach innen exponentiell abfällt. Aufgrund des Skin-Effekts tritt eine Verringerung des wirksamen Leiterquerschnitts auf. Die Impedanz des Leiters erhöht sich mit zunehmender Frequenz.

Durch den Skin-Effekt lässt sich bei der Hubeltrocknung insbesondere die mit zunehmender Frequenz beobachtete Verringerung der Stromaufnahme erklären. Doch auch die beobachtete überraschende Verkürzung der Trocknungszeit wird durch den Skin-Effekt erklärbar. Bei einer niedrigen Frequenz wie einer Netzfrequenz von z. B. 50 Hz tritt der Skin-Effekt bei der noch feuchten keramischen Rohmasse eher vernachlässigbar auf. Folglich fließt der Wechselstrom zu einem nicht unerheblichen Teil auch im Inneren der zu trocknenden keramischen Rohmasse. Da die Rohmasse jedoch gleichmäßig durchfeuchtet ist, wird die im Inneren eingebrachte elektrische Leistung nicht zu einer Wasseraustragung des ungebundenen Wassers führen, da dieses wegen des "Umgebungswassers" nicht nach außen gelangen kann. Folglich wird ein nicht unerheblicher Teil der eingebrachten elektrischen Leistung zwar zu einer Erwärmung, jedoch nicht zu einer Wasseraustragung führen. Anders verhält es sich hingegen bei Beachtung des Skin-Effekts. In diesem Fall ist der Stromfluss eher auf den Rand des durchflossenen Rohlings begrenzt. Die am Rand eingebrachte elektrische Leistung kann damit unmittelbar zur Wasseraustragung eingesetzt werden. Durch den einsetzenden Wasseraustrag am Rand verringert sich dort die elektrische Leitfähigkeit, sodass die Skin-Schicht, in der der elektrische Wechselstrom fließt, im Laufe der Trocknungszeit von außen nach innen wandert. Mit anderen Worten wird die elektrische Leistung beim Trocknen des Hubeis unter Beachtung des Skin-Effekts genau dort eingebracht, wo ungebundenes Wasser nach außen entweichen kann. Der Anteil an zur Wasseraustragung ungenutzter elektrischer Leistung wird verringert. Die Trocknungszeit wird verkürzt.

Überraschend hat sich somit insgesamt gezeigt, dass beim Übergang der Frequenz des zur elektrischen Vortrocknung eingesetzten Wechselstroms von einer Netzfrequenz zu höheren Frequenzen, also zu Frequenzen größer als 100 Hz, der elektrische Energieaufwand zur Hubeltrocknung bis zur Abdrehreife beträchtlich reduziert werden kann. Um eine höhere Frequenz einsetzen zu können, ist bevorzugt ein geeigneter Umrichter eingesetzt, der eingangsseitig am allgemeinen Stromnetz angeschlossen ist, und der ausgangsseitig die gewünscht erhöhte Frequenz liefert.

Eigene Untersuchungen indizieren, dass gegenüber einer landestypisch verwendeten Netzfrequenz von 50 Hz eine wirtschaftlich relevante Energieeinsparung bei einem Übergang zu Frequenzen von mehr als 100 Hz einsetzt.

Weiter bevorzugt wird der Wechselstrom mit einer Frequenz zwischen 300 Hz und 1000 Hz durch den Rohling geleitet. In diesem Bereich wurde eine deutliche Energieeinsparung zwischen 10 % und 30 % gegenüber einer Wechselstromtrocknung mit einer Frequenz von 50 Hz beobachtet.

Als Rohling wird in einer vorteilhaften Ausführungsvariante ein extrudierter Massestrang aus der Rohmasse eines keramischen Isolators vorgetrocknet. Die Erfindung lässt sich jedoch problemlos auch auf andere keramische Rohlinge übertragen. Der extrudierte Massestrang oder Hubel ist insbesondere ein Rohling für einen Porzellanisolator und weist dementsprechend eine Zusammensetzung aus verschiedenen Mineralien, insbesondere aus Kaolin, Feldspat und Tonerde auf. Bei dem Hubel handelt es sich insbesondere um einen Vollkernhubel, wobei die Einbringung der Innenkontur nach der elektrischen Vortrocknung erfolgt.

Die im keramischen Rohling nach dem Pressvorgang enthaltenen Feuchten hängen von den spezifisch eingesetzten Tonmineralien sowie vom Fertigungsprozess als solchem ab. Auch variieren die benötigten Abdrehfeuchten für verschiedene Typen und Zusammensetzungen und basieren insbesondere auch auf Erfahrungswerten des jeweiligen Herstellers. Bevorzugt erfolgt die elektrische Vortrocknung des noch feuchten Rohlings im Falle einer Hubeltrocknung von einem anfänglichen Feuchtegehalt zwischen 18 % und 21 % auf einen Feuchtegehalt der Abdrehreife zwischen 15 % und 17 %. Die Prozentangaben beziehen sich dabei auf die jeweiligen Gewichtsanteile an Wasser bezogen auf das Gesamtgewicht.

Die Vortrocknung erfolgt zweckmäßigerweise temperaturgeregelt. Dazu kann beispielsweise die Temperatur des Rohlings während des Trocknungsvorganges kontinuierlich gemessen und durch Steuern der anliegenden Spannung auf einen vorgegebenen Sollwert geregelt werden. Weiter kann ein Maximalwert vorgegeben werden, bei dessen Erreichen der Stromkreis zur Trocknung des Rohlings unterbrochen wird. Bei Erreichen eines Minimalwerts wird der Stromkreis wieder geschlossen. Letzteres Verfahren empfiehlt sich aus Kostengründen, da es vergleichsweise einfache Sensoren und Regler, wie z.B. einen Zweipunktregler, benötigt.

Als Maximaltemperatur der Vortrocknung wird bevorzugt ein Wert zwischen 35 °C und 45 °C und für die Minimaltemperatur ein Wert zwischen 25 °C und 35 °C gewählt. Dabei sind die Einzelwerte so vorzugeben, dass der Wert der Minimaltemperatur stets geringer als der Wert der Maximaltemperatur ist.

Zur Einschaltung des keramischen Rohlings in den Stromkreis wird weiter bevorzugt an die Stirnseiten des Rohlings eine metallische Matte angelegt, sodass die Stromeintragung flächig erfolgt. Die metallische Matte kann beispielsweise ein Kupfernetz oder eine Aluminiumfolie sein.

In einer Variante werden mehrere keramische Rohlinge in Serie in den Stromkreis eingeschaltet. Im Falle eines Drehstromnetzes können auch mehrere keramische Rohlinge jeweils in Serie und jeweils zwischen zwei Phasen des Drehstromnetzes eingeschaltet sein.

Zu einer gleichmäßigen und die Gefahr einer Austrocknung vermeidenden elektrischen Vortrocknung wird der Rohling mit einer Wechselspannung zwischen 300 V und 500 V beaufschlagt. Bei diesen Spannungswerten ergeben sich bei der Hubeltrocknung typischerweise Stromstärken von einigen 10 A. Damit lassen sich erfahrungsgemäß die besten Vortrocknungsergebnisse erzielen.

Die Erfindung wird im Weiteren anhand einiger Ausführungsbeispiele beschrieben.

### Beispiel 1:

Für insgesamt vier hinsichtlich ihrer Länge und hinsichtlich ihres Durchmessers variierende Typen von Porzellanisolatoren gleicher Zusammensetzung wird jeweils eine Trocknung der Vollkernhubel unter Anlegen einer Wechselspannung von 400 V mit einer Frequenz von 50 Hz und mit einer Frequenz von 650 Hz durchgeführt. Die nach dem Press- oder Ziehvorgang noch feuchten Hubel weisen eine Feuchte von 20 % auf. Die elektrische Vortrocknung wird jeweils bis zu einer Feuchte von 16,5 % durchgeführt. Der Restfeuchtegehalt wird mittels eines Penetrometers kontrolliert. Die Trocknungszeiten der 50 Hz-Trocknung und der 650 Hz-Trocknung werden miteinander verglichen. Bei der 650 Hz-Trocknung ergeben sich für die verschiedenen Hubeltypen Reduzierungen der Trocknungszeiten zwischen 40 % und 65 %.

### Beispiel 2:

Es werden identisch hergestellte Vollkernhubel mit einer Länge von 2340 mm und einem Durchmesser von 320 mm zur elektrischen Vortrocknung an eine Wechselspannung von 400 V angeschlossen. Während einer Trocknungszeit von etwa einem Tag, wobei auf eine Solltemperatur von 40 °C geregelt wird, wird die Stromstärke des durchfließenden Wechselstroms kontrolliert und hieraus der Energieverbrauch ermittelt. Zugleich wird die resultierende Restfeuchte beobachtet. Die elektrische Vortrocknung wird bei einer Frequenz von 50 Hz und bei einer Frequenz von 650 Hz durchgeführt.

Bei der elektrischen Vortrocknung mit 50 Hz wird eine mittlere Stromstärke von 14,45 A beobachtet. Die mittlere Stromstärke bei der elektrischen Vortrocknung mit 650 Hz beträgt 12,60 A. Am Ende der Laufzeit ist die Restfeuchte des Hubels bei der elektrischen Vortrocknung mit 650 Hz mit 15,67 % um etwa 1 % geringer als die Restfeuchte von 16,58 % des Hubels, welcher bei 50 Hz getrocknet wurde. Bei gleicher Verweildauer wurden für die 50 Hz-Trocknung insgesamt 129,8 kWh gegenüber 106,8 kWh bei 650 Hz-Trocknung benötigt. Damit wurden für die elektrische Vortrocknung mit 650 Hz 23 kWh weniger benötigt. Dies bedeutet eine Energieeinsparung von 18 % ohne auf die durch raschere Trocknung sich weiter verkürzende Trocknungszeit bei 650 Hz zu achten.

### Beispiel 3:

Für Vollkernhubel der Artikel Nr. 12302 mit einer anderen Länge und einem anderen Durchmesser wird das Verfahren gemäß Beispiel 2 mehrfach wiederholt. Es wird der durchschnittliche Energieverbrauch der elektrischen Vortrocknung bei 50 Hz und der elektrischen Vortrocknung bei 650 Hz miteinander verglichen. Bei der elektrischen Vortrocknung mit 650 Hz ergibt sich eine Verringerung des Energiebedarfs um 30 %.

### Beispiel 4:

Für die Vollkernhubel entsprechend Beispiel 3 wird während der elektrischen Vortrocknung zu verschiedenen Zeiten zwischen den Frequenzen 50 Hz, 325 Hz und 650 Hz umgeschaltet. Die angelegte Spannung betrug jeweils 400 V. Es wird die jeweilige Stromstärke beobachtet.

Bei der elektrischen Vortrocknung mit 50 Hz steigt die Stromstärke von 36 A bei einer Ausgangsfeuchte von 20 % auf eine Stromstärke von 45 A bei einer Restfeuchte von 16,8 %. Bei der elektrischen Vortrocknung mit 325 Hz steigt die Stromstärke von 35 A bei der Ausgangsfeuchte auf eine Stromstärke von 43 A bei der Restfeuchte. Bei der elektrischen Vortrocknung mit 650 Hz steigt die Stromstärke von 30 A bei der Ausgangsfeuchte auf eine Stromstärke von 37 A bei der Restfeuchte.

Es wird ersichtlich, dass die Stromstärke aufgrund des Skin-Effekts mit steigender Frequenz sinkt. Da die Trocknungszeiten mit steigender Frequenz ebenfalls sinken, ergibt sich eine beträchtliche Reduzierung des benötigten Energiebedarfs.

## Patentansprüche

1. Verfahren zur elektrischen Vortrocknung eines feuchten Rohlings aus einer keramischen Rohmasse, wobei der Rohling in einen Stromkreis geschaltet und ein Wechselstrom durch den Rohling geleitet wird,
**dadurch gekennzeichnet,**
**dass** der Wechselstrom mit einer Frequenz größer als 100 Hz durch den Rohling geleitet wird.

2. Verfahren nach Anspruch 1,
**dadurch gekennzeichnet,**
**dass** der Wechselstrom mit einer Frequenz zwischen 300 Hz und 1000 Hz durch den Rohling geleitet wird.

3. Verfahren nach einem Ansprüche 1 oder 2,
**dadurch gekennzeichnet,**
**dass** als Rohling ein extrudierter Massestrang aus der Rohmasse eines keramischen Isolators vorgetrocknet wird.

4. Verfahren nach Anspruch 3,
**dadurch gekennzeichnet,**
**dass** als extrudierter Massestrang ein Vollkernhubel vorgetrocknet wird.

5. Verfahren nach einem der vorhergehenden Ansprüche,
**dadurch gekennzeichnet,**
**dass** die elektrische Vortrocknung von einem Feuchtegehalt zwischen 18% und 21% auf einen Feuchtegehalt zwischen 15% und 17% erfolgt.

6. Verfahren nach einem der vorhergehenden Ansprüche,
**dadurch gekennzeichnet,**
**dass** die Vortrocknung temperaturgeregelt erfolgt, indem während der Trocknung die Temperatur des Rohlings erfasst wird, und der Stromfluss bei Erreichen einer Maximaltemperatur unterbrochen sowie bei Erreichen einer Minimaltemperatur eingeschaltet wird.

7. Verfahren nach Anspruch 6,
**dadurch gekennzeichnet,**
**dass** die Maximaltemperatur mit einem Wert zwischen 35 °C und 45 °C und die Minimaltemperatur mit einem Wert zwischen 25 °C und 35 °C gewählt wird.

8. Verfahren nach einem der vorhergehenden Ansprüche,
**dadurch gekennzeichnet,**
**dass** die Stromeinleitung mittels einer an den Stirnseiten des Rohlings angebrachten metallischen Matte erfolgt.

9. Verfahren nach einem der vorhergehenden Ansprüche,
**dadurch gekennzeichnet,**
**dass** der Rohling mit einer Wechselspannung zwischen 300 V und 500 V beaufschlagt wird.

10. Verfahren nach einem der vorhergehenden Ansprüche,
**dadurch gekennzeichnet,**
**dass** zur Frequenzerhöhung des Wechselstroms ein Umrichter eingesetzt wird.

## Claims

1. Method for electrically predrying a moist blank of a ceramic raw mixture, the blank being connected into a circuit and an alternating current being passed through the blank, **characterized in that** the alternating current is passed through the blank at a frequency of greater than 100 Hz.

2. Method according to Claim 1, **characterized in that** the alternating current is passed through the blank at a frequency of between 300 Hz and 1000 Hz.

3. Method according to either of Claims 1 and 2, **characterized in that** an extruded clay column of the raw mixture of a ceramic insulator is predried as the blank.

4. Method according to Claim 3, **characterized in that** a solid-core clot is predried as the extruded clay column.

5. Method according to one of the preceding claims, **characterized in that** the electrical predrying is performed from a moisture content of between 18% and 21% to a moisture content of between 15% and 17%.

6. Method according to one of the preceding claims, **characterized in that** the predrying is performed under temperature control, **in that** the temperature of the blank is sensed during the drying and the current flow is interrupted on reaching a maximum temperature and is switched on on reaching a minimum temperature.

7. Method according to Claim 6, **characterized in that** the maximum temperature is chosen with a value of between 35°C and 45°C and the minimum temperature is chosen with a value of between 25°C and 35°C.

8. Method according to one of the preceding claims, **characterized in that** the introduction of current takes place by means of a metallic mat applied to the end faces of the blank.

9. Method according to one of the preceding claims, **characterized in that** the blank is subjected to an alternating voltage of between 300 V and 500 V.

10. Method according to one of the preceding claims, **characterized in that** a converter is used for increasing the frequency of the alternating current.

## Revendications

1. Procédé pour le préséchage électrique d'un ébauche humide à partir d'une masse brute céramique, l'ébauche étant commutée dans un circuit électrique et un courant alternatif étant guidé à travers l'ébauche, **caractérisé en ce que** le courant alternatif est guidé avec une fréquence supérieure à 100 Hz à travers l'ébauche.

2. Procédé selon la revendication 1, **caractérisé en ce que** le courant alternatif est guidé avec une fréquence se situant entre 300 Hz et 1000 Hz à travers l'ébauche.

3. Procédé selon l'une quelconque des revendications 1 ou 2, **caractérisé en ce qu'**un boudin de pâte extrudé de la masse brute d'un isolateur céramique est préséché en tant qu'ébauche.

4. Procédé selon la revendication 3, **caractérisé en ce qu'**un tronçon à noyau plein est préséché en tant que boudin de pâte extrudé.

5. Procédé selon l'une quelconque des revendications précédentes, **caractérisé en ce que** le préséchage électrique a lieu d'une teneur en humidité entre 18% et 21% à une teneur en humidité entre 15% et 17%.

6. Procédé selon l'une quelconque des revendications précédentes, **caractérisé en ce que** le préséchage a lieu avec régulation de température, la température de l'ébauche étant saisie pendant le séchage et le flux de courant interrompu lorsque la température maximale est atteinte et connecté lorsque la température minimale est atteinte.

7. Procédé selon la revendication 6, **caractérisé en ce que** la température maximale est choisie avec une valeur entre 35° C et 45° C et la température minimale avec une valeur entre 25° C et 35° C.

8. Procédé selon l'une quelconque des revendications précédentes, **caractérisé en ce que** l'introduction du courant a lieu au moyen d'une natte métallique montée sur les faces avant de l'ébauche.

9. Procédé selon l'une quelconque des revendications précédentes, **caractérisé en ce qu'**une tension alternative entre 300 V et 500 V est appliquée à l'ébauche.

10. Procédé selon l'une quelconque des revendications précédentes, **caractérisé en ce qu'**un convertisseur est utilisé pour l'augmentation de la fréquence du courant alternatif.
